(19) Europäisches Patentamt
European Patent Office
Office européen des brevets

(11) EP 2 551 297 B1

(12) **EUROPEAN PATENT SPECIFICATION**

(45) Date of publication and mention of the grant of the patent:
**12.03.2014 Bulletin 2014/11**

(21) Application number: **11006090.2**

(22) Date of filing: **25.07.2011**

(51) Int Cl.:
***C08L 23/02*** *(2006.01)*
***C08K 5/13*** *(2006.01)*
***C08K 5/1575*** *(2006.01)*
***C08K 5/53*** *(2006.01)*
***C08K 5/1545*** *(2006.01)*

# (54) Polyolefin composition with excellent colour and thermal stability as well as oxidation resistance for pipes

Polyolefinzusammensetzung mit hervorragender Farb- und Wärmebeständigkeit sowie Oxidationsbeständigkeit für Rohre

Composition de polyoléfine avec excellente stabilité thermique et de couleur ainsi que résistance à l'oxydation pour conduits

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.01.2013 Bulletin 2013/05**

(73) Proprietor: **Borealis AG**
**1220 Vienna (AT)**

(72) Inventors:
- **Anker, Martin**
  **42543 Hisings Kärra (SE)**
- **Jamtvedt, Svein**
  **3960 Stathelle (NO)**

(74) Representative: **Kador & Partner**
**Corneliusstrasse 15**
**80469 München (DE)**

(56) References cited:
**EP-A1- 1 911 799**
**EP-A1- 2 199 327**
**EP-A1- 2 199 330**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 551 297 B1

## Description

The present invention relates to a polyolefin composition with increased resistance to discoloration and to oxidation and to a pipe made of such a polyolefin composition. The present invention further relates to the use of the polyolefin composition for the production of a pipe or a fitting and to the use of a combination of particular types of antioxidants for increasing the resistance of the polyolefin composition against degradation caused by oxidation.

Recent progresses in the manufacturing and processing of polymers have led to the application of plastics in virtually every aspect of modern day life. However, polymeric compounds are prone to aging under the effects of oxidants, light and heat. This results in a loss of lifetime such as loss of strength, stiffness and flexibility, discoloration and scratching as well as loss of gloss.

It is well-known in the art that antioxidants and light stabilizers can prevent or at least reduce these effects. Several types of additives are added to polymers to protect them during processing and to achieve the desired end-use properties. Additives are generally divided in stabilizers and modifiers. Stabilizers, like antioxidants, traditionally and currently used comprise sterically hindered phenolics, aromatic amines, hindered amine stabilizers, organophosphites/phosphonites and thioethers. However, appropriate combinations of stabilizers have to be carefully selected, depending on the desired final properties, the polymeric article should have.

Thus, there is still a need for a more efficient antioxidant which provides a better protection against discoloration and oxidation as well as thermal degradation to a polyolefin composition, and thus allows for a longer lifetime of e.g. a pipe, made of a polyolefin composition containing such an antioxidant.

A further important issue as regards the presence of antioxidants in polyolefin compositions is the aim to avoid contamination of media transported e.g. in a pipe made of such a polyolefin composition. This is particularly important in case of a pipe transporting drinking water. Generally speaking, it is preferred to use as low concentrations of antioxidant as possible in order to lower the amount of antioxidant which may possibly be extracted by the water transported in the pipe. Further in this context, it is desirable that the antioxidant used has a low tendency to extraction by the water transported in the pipe.

The admissible amounts of harmful compounds within the drinking water are fixed by legal requirements and even stricter requirements are to be expected with the introduction of the so-called "European acceptance scheme".

Migration behavior of stabilizers and modifiers added to polyolefin-based materials is dependent from a number of different properties such as diffusion rate of the molecules within the polymer matrix, chemical stability of the additives, type of additive decomposition products, etc. To give an example, a specific additive compound might have improved chemical stability, thereby having a beneficial effect on migration behavior, but might, on the other hand, decompose into compounds easily diffusing through the polymer matrix, thereby having a detrimental effect on migration behavior. Furthermore, it has to be taken into account that an improvement in migration behavior must not be obtained on the expense of stabilization of the polymer matrix. Thus, providing an additive composition of low migration tendency, is not straight-forward but rather needs a careful selection of appropriate compounds.

However, to further improve drinking water quality and considering stricter legal requirements to be expected in the near future, it is still highly appreciated to provide pipes of high thermal and chemical stability and releasing only very small amounts of additives into the water.

Additionally, reactions which may take place between pigments and additives in the resin composition of pipes may cause discoloration. Accordingly, there is a need for an additive combination minimizing the discoloration effect in natural or colored polyolefin compositions.

It should be noted that additive combinations which achieve a low migration into drinking water might still suffer from a discoloration effect, whereas coloring-resistant additive combinations mights still be extracted into drinking water in contact with the polymeric surfaces of pipes.

EP 1 911 798 A1 discloses a composition comprising a polyolefin (A); a compound (B) which has a diphosphite structure; c) a phenolic compound (C); and d) optionally, an UV-light stabilizer (D), wherein the total amount of migrated compounds (B), (C) and, if present, (D), as well as their decomposition products are below certain threshold levels in the composition. The composition show reduced migration of additives into water in contact with composition samples which were leached with unchlorinated water according to EN-12873-1 at room temperature (23 °C).

EP 2 199 330 A1 relates to a polyolefin composition with good resistance to degradation caused by chlorine dioxide-containing water and at the same time showing low migration of the used additives and its decomposition products, especially phenols, out of the composition. The polyolefin composition comprises a polyolefin base resin (A), an antioxidant (B) having a chroman-6-ol structure, an antioxidant (C) having a phenolic structure, wherein the entire molecule does not comprise an ester group, and the concentration of antioxidant (C) in the polyolefin composition is at least 1200 ppm, based on the total composition. The compositions show resistance to $ClO_2$-containing water according to ASTM F2263-03 and reduced phenolic migration into water according to EN-12873-1 at room temperature (23 °C).

WO 97/49758 is directed to reduce oxidation and discoloration in polyethylene compositions. A stabilizer composition is disclosed which comprises (a) at least one sterically hindered phenol, (b) at least one phosphorus-containing

secondary antioxidant, and (c) at least one tocopherol compound wherein the weight ratio of component (a) to component (b) is from 2:1 to 1:4 and the weight ratio of component (a) to component (c) is from 2:1 to 10:1. Preferred compounds falling under components (a), (b) and (c) encompass extended lists of the types under (a) to (c).

Hence, there is still a need for improved polyolefin compositions suitable for water pipe applications, particularly for polyolefin compositions having an increased lifetime exhibiting reduced discoloration and increased oxidation and thermal resistance over a prolonged time.

Thus, it is an object of the present invention to provide a polyolefin composition for pipes having an increased lifetime exhibiting reduced discoloration and increased oxidation and thermal resistance over a prolonged time.

The present invention is based on the finding that the objects of the invention can be achieved, if the polyolefin composition comprises a specific combination of several types of antioxidants.

Therefore, the present invention relates to a polyolefin composition comprising

a) a polyolefin base resin (A),

b) an antioxidant (B) according to formula (I):

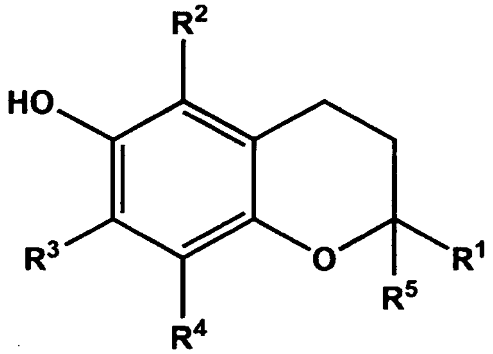

wherein $R^1$, $R^2$, $R^3$, $R^4$ and $R^5$ independently are H, or non-substituted or substituted aliphatic or aromatic hydrocarbyl radicals which may comprise heteroatoms,

c) an antioxidant (C) according to formula (II):

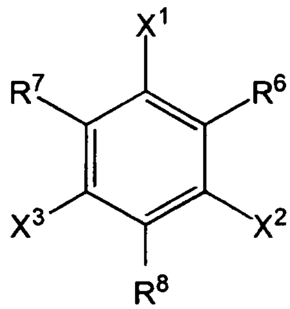

wherein

- $R^6$, $R^7$ and $R^8$ independently are non-substituted or substituted aliphatic or aromatic hydrocarbyl radicals which independently may comprise heteroatoms,

- $X^1$, $X^2$, and $X^3$ independently are H or OH, with the proviso that at least one of $X^1$, $X^2$ and $X^3$ is OH, and

- the entire molecule comprises no ester group; and

d) an antioxidant (D) according to formula (III):

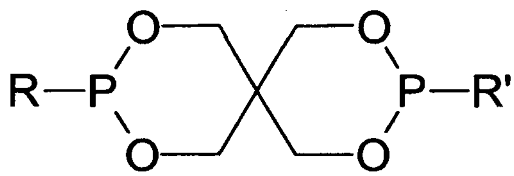

wherein R and R' are 2,6-di-t-butyl-4-methylphenyl.

The heteroatoms which may be present in the non-substituted or substituted aliphatic or aromatic hydrocarbyl radicals $R^1$, $R^2$, $R^3$, $R^4$ and/or $R^5$ of antioxidant (B) according to formula (I) may be oxygen, sulphur, nitrogen, phosphorus or the like. It is, however, preferred that $R^1$, $R^2$, $R^3$, $R^4$ or $R^5$, more preferred $R^1$, $R^2$, $R^3$, $R^4$ and $R^5$, do not comprise heteroatoms, i.e. are non-substituted or substituted aliphatic or aromatic hydrocarbyl radicals only, or, as mentioned, H.

Furthermore, preferably $R^2$, $R^3$, $R^4$ or $R^5$, more preferably $R^2$, $R^3$, $R^4$ and $R^5$, are H, or saturated aliphatic hydrocarbyl radicals comprising from 1 to 5 carbon atoms, and still more preferably $R^2$, $R^3$, $R^4$ or $R^5$, more preferably $R^2$, $R^3$, $R^4$ and $R^5$, are H, or methyl groups.

Furthermore, preferably $R^5$ is a methyl group, regardless of the nature of the other residues $R^2$ to $R^4$.

In an especially preferred embodiment, $R^4$ and $R^5$ are methyl groups, and $R^2$ and $R^3$ are H, or methyl groups.

Most preferably, $R^2$, $R^3$, $R^4$ and $R^5$ are all methyl groups.

Still further, preferably $R^1$ is a non-substituted or substituted aliphatic or aromatic hydrocarbyl radical containing from 5 to 50 carbon atoms, more preferably $R^1$ is a non-substituted or substituted aliphatic hydrocarbyl radical containing from 5 to 50, more preferably from 10 to 30, carbon atoms, and most preferably $R^1$ is a 4,8,12-trimethyl-tridecyl group.

Still more preferred, antioxidant (B) is 2,5,7,8-Tetrametyl-2-(4',8',12'-trimethyltridecyl)chroman-6-ol (Vitamine E).

In antioxidant (C) according to formula (II) residues $R^6$, $R^7$ and $R^8$ independently are non-substituted or substituted aliphatic or aromatic hydrocarbyl radicals which independently may comprise heteroatoms. This means that apart from the at least one ester group in the entire molecule, further heteroatoms or heteroatomic groups may be present.

Preferably, at least one of residues $R^6$, $R^7$ and $R^8$ comprises at least one OH-group. Still more preferably, only one of residues $R^6$, $R^7$ and $R^8$ comprises at least one OH-group, and more preferably the other two residues do not comprise any heteroatom. The latter preferred embodiment means that both the at least one ester group and the at least one OH-group are comprised in the same residue selected from $R^6$, $R^7$ and $R^8$.

Preferably, no further heteroatoms are present in $R^6$, $R^7$ and $R^8$, so that phenolic stabilizer (C) is e.g. free of amide groups and groups containing phosphorus.

Preferably, $R^6$, $R^7$ and $R^8$ are aliphatic radicals.

Preferably, $R^6$, $R^7$ and $R^8$ independently have from 2 to 200 carbon atoms.

Preferably, $R^6$ and $R^7$ independently have from 2 to 20 carbon atoms, more preferably from 3 to 10 carbon atoms.

Furthermore, it is preferred that $R^6$ and/or $R^7$, more preferably $R^6$ and $R^7$, are aliphatic hydrocarbyl groups with at least 3 carbon atoms which have a branch at the carbon atom connected to the aromatic ring, and most preferably $R^6$ and/or $R^7$, more preferably $R^6$ and $R^7$, are tert, butyl groups.

Preferably, $R^8$ has from 20 to 100 carbon atoms, more preferably has from 30 to 70 carbon atoms.

Furthermore, it is preferred that $R^8$ includes one or more phenyl residues.

Still further, it is preferred that $R^8$ includes one or more hydroxyphenyl residues.

In the most preferred embodiment, $R^8$ is a pentaerythrityl-tris(3-(3',5'-di-tert. butyl-4-hydroxyphenyl)propionate)-3-propionate residue.

Preferably, in antioxidant (C) of formula (II) $X^1$ is OH, and most preferably $X^1$ is OH and $X^2$ and $X^3$ are H.

Antioxidant (B) is preferably contained in the composition in an amount of 5000 ppm or less, more preferably 2000 ppm or less, still more preferably 1000 ppm or less, still more preferably 500 ppm or less, and most preferably 300 ppm or less, based on the total composition.

The amount of antioxidant (C) in the polyolefin composition is preferably 5000 ppm or less, more preferably 3500 ppm or less, still more preferably 2500 ppm or less and particularly preferred is 1300 ppm or less, based on the total composition.

Usually, the composition will contain any of the antioxidants (B) and (C) independently in an amount of at least 50 ppm.

Preferably, the sum of concentration of antioxidants (B) and (C) is between 500 and 5000 ppm, more preferably between 1000 and 4800 ppm.

Compound (D) is Bis(2,6-di-*t*-butyl-4-methylphenyl)pentaerythrityl-di-phosphite (ADK STAB PEP-36).

Furthermore, antioxidant (D) is preferably used in an amount of 5000 ppm or less, more preferably of 2000 ppm or less, most preferably of 1000 ppm or less, based on the total composition.

Usually, the composition will contain any of the antioxidants (B), (C) and (D) independently in an amount of at least 50 ppm.

Preferably, the sum of concentration of antioxidants (B), (C) and (D) is between 500 and 2500 ppm, more preferably between 1000 and 2000 ppm, still more preferably between 1100 and 1800 ppm.

The term "base resin" denotes the entirety of polymeric components in the polyolefin composition according to the invention, usually making up at least 90 wt% of the total composition.

The favourable effect of the antioxidants according to the present invention is not dependent on the type of polyolefin base resin used. The base resin may therefore be any polyolefin or polyolefin composition.

However, it is preferred that the base resin (A) comprises an ethylene homo- or copolymer or a propylene homo- or copolymer. Preferably, the comonomer is selected from ethylene and alpha-olefins with 4 to 8 carbon atoms. Still more preferably ethylene or an alpha-olefin selected from 1-butene, 1-hexene, 4-methyl-1-pentene and 1-octene is used.

The amount of comonomer in the base resin (A) is preferably between 0.1 mol% and 7.0 mol%.

It is particularly preferred that the base resin (A) comprises an ethylene homo- or copolymer, more preferably that the base resin (A) consists of an ethylene homo- or copolymer.

In one embodiment of the invention the base resin comprises two or more polyolefin, more preferably polyethylene, fractions with different weight average molecular weight. Such resins usually are denoted as multimodal resins.

Polyolefin, in particular polyethylene, compositions comprising multimodal resins are frequently used e.g. for the production of pipes due to their favourable physical and chemical properties as e.g. mechanical strength, corrosion resistance and long-term stability. Such compositions are described e.g. in EP 0 739 937 and WO 02/102891. The term molecular weight used herein generally denotes the weight average molecular weight $M_w$.

As mentioned, usually a polyethylene composition comprising at least two polyolefin fractions, which have been produced under different polymerisation conditions resulting in different weight average molecular weights for the fractions, is referred to as "multimodal". The prefix "multi" relates to the number of different polymer fractions the composition is consisting of. Thus, for example, a composition consisting of two fractions only is called "bimodal".

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In a preferred embodiment wherein the base resin consists of two polyethylene fractions, the fraction having a lower weight average molecular weight is denoted fraction (A), the other is denoted fraction (B).

Fraction (A) preferably is an ethylene homopolymer.

Fraction (B) preferably is an ethylene copolymer, and preferably comprises at least 0.1 mol% of at least one alpha-olefin comonomer. The amount of comonomer is preferably at most 14 mol%.

In a preferred embodiment wherein the polyolefin composition is a polyethylene composition, the base resin of the polyethylene composition preferably comprises at least 0.1 mol%, more preferably at least 0.3 mol%, and still more preferably at least 0.7 mol% of at least one alpha-olefin comonomer. The amount of comonomer is preferably at most 7.0 mol%, more preferably at most 6.0 mol%, and still more preferably at most 5.0 mol%.

As an alpha-olefin comonomer, preferably an alpha-olefin having from 4 to 8 carbon atoms is used. Still more preferably an alpha-olefin selected from 1-butene, 1-hexene, 4-methyl-1-pentene and 1-octene is used.

The polyolefin base resin preferably has an $MFR_5$ (190 °C, 5 kg) of from 0.01 to 5.0 g/10min, more preferably from 0.1 to 2.0 g/10min, still more preferably from 0.2 to 1.5 g/10min, and most preferably from 0.5 to 1.0 g/10min.

The density of the base resin preferably is from 930 to 960 $kg/m^3$, more preferably is from 935 to 958 $kg/m^3$, and most preferably is from 936 to 955 $kg/m^3$.

In addition to the base resin and the antioxidants, usual additives for utilization with polyolefins, such as pigments (for example carbon black), stabilizers, antiacids and/or anti-UVs, antistatic agents and utilization agents (such as processing aid agents) may be present in the polyolefin composition.

The amount of such additives usually is 10 wt% or below.

Carbon black is a generally used pigment, which also acts as an UV-screener. Typically carbon black is used in a final amount of from 0.5 to 5 % by weight, preferably from 1.5 to 3.0 % by weight. Preferably the carbon black is added as a masterbatch, i.e. Carbon black master batch (CBMB) where it is premixed with a polymer, preferably high density polyethylene (HDPE), in a specific amount as e.g. shown in the Examples. Suitable carbon black masterbatches are, among others, HD4394, sold by Cabot Corporation, and PPM1805 by Poly Plast Muller.

The polymerisation catalysts for the production of the base resin include coordination catalysts of a transition

metal, such as Ziegler-Natta (ZN), metallocenes, non-metallocenes, Cr-catalysts etc. The catalyst may be supported, e.g. with conventional supports including silica, Al-containing supports and magnesium dichloride based supports. Preferably the catalyst is a ZN catalyst, more preferably the catalyst is a non-silica supported ZN catalyst, and most preferably a $MgCl_2$-based ZN catalyst.

The Ziegler-Natta catalyst further preferably comprises a group 4 (group numbering according to new IUPAC system) metal compound, preferably titanium, magnesium dichloride and aluminum.

The catalyst may be commercially available or be produced in accordance or analogously to the literature. For the preparation of the preferable catalyst usable in the invention, reference is made to WO 2004/055068 and WO 2004/055069 of Borealis and EP 0 810 235. The content of these documents in its entirety is incorporated herein by reference, in particular concerning the general and all preferred embodiments of the catalysts described therein as well as the methods for the production of the catalysts. Particularly preferred Ziegler-Natta catalysts are described in EP 0 810 235.

The composition preferably is produced in a process comprising a compounding step, wherein the base resin which is typically obtained as a base resin powder from the reactor, together with the antioxidants and optionally other additives is extruded in an extruder to yield the composition according to the present invention.

Of course, when using the inventive composition, further compounds selected from conventional additives, fillers, minerals and lubricants may be added for improving processability and surface characteristics thereof.

The composition of the present invention is preferably used in pipes - black as well as natural (i.e. non-colored) or colored pipes. Preferably, such a pipe is used in a drinking water supply system. It is furthermore preferred that the pipe is a cold water pipe, i.e. that it is designed for the transport of cold water.

Hence, the present invention is also directed to a pipe comprising the inventive polyolefin composition mentioned above including all the preferred embodiments. Such pipes show an improved resistance against oxidation and discoloration and further against thermal degradation.

The pipes are preferably produced by extrusion of the polyolefin composition.

The present invention is therefore also directed to the use of a polyolefin composition according to the invention, including all of the preferred embodiments, for the production of a pipe or a fitting.

The present invention is also directed to the use of said inventive pipes for the transport of liquid media, e.g. drinking water.

Finally, the present invention is further directed to the use of a combination of antioxidants (B), (C) and (D) as defined above, including all of the preferred embodiments, in a polyolefin composition for increasing the lifetime of a pipe or a fitting made of said polyolefin composition which pipe is in permanent contact with drinking water and exhibiting reduced discoloration and increased oxidation and thermal resistance over a prolonged time compared to a pipe made of a corresponding polyolefin composition without any antioxidant, preferably compared to a pipe made of a corresponding polyolefin composition comprising antioxidants or a combination of antioxidants other than the combination of antioxidants (B), (C) and (D) in an equal concentration.

A "corresponding polyolefin composition" denotes a polyolefin composition which comprises the same base resin and the same additives in the same concentration as the inventive polyolefin composition besides the combination of antioxidants (B), (C) and (D).

The "equal concentration" of antioxidants addresses the sum of concentration of antioxidants (B), (C) and (D) and the sum of concentration of antioxidants in corresponding polyolefin compositions.

Resistance to oxidative decomposition is expressed as oxygen induction time (OIT) as described below. The compositions of the invention preferably have an OIT after 125 days water storage at 80 °C of not less than 45 min. (not more than 10% degradation).

Resistance to discoloration is expressed as "delta E" according to a colorimetric method described below. The compositions of the invention preferably have a delta E value after water storage at 80 °C of not more than 20 after 125 days.

Resistance to discoloration is expressed as "delta E" according to a colorimetric method described below. The compositions of the invention preferably have a delta E value after 3000 hours water storage at 80 °C and 167 days at 120°C in a circulating air oven of not more than 15.

Thermal resistance is expressed as the time to embrittlement and tested in a circulating air oven described below. The compositions of the invention preferably have a time to embrittlement after 3000 hours water storage at 80°C and after oven ageing at 120 °C of at least 125 days.

## Examples

### 1. Definitions and measurement methods

#### a) Density

Density of the polymer was measured according to ISO 1183-1:2004 on compression moulded specimen prepared according to EN ISO 1872-2(Feb 2007) and is given in kg/m$^3$.

#### b) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene and at a loading of 5.00 kg ($MFR_5$).

#### c) Content of antioxidant

Sample preparation: The polymer pellets are ground in an ultracentrifugal mill (Retsch ZM 100) with a sieve with 2 mm holes. The pellets are cooled down with liquid nitrogen. 5 g of the ground polymer is extracted in 50 ml of cyclohexane at a temperature of 81 °C for 2 hours. If needed, cyclohexane is then added to exact 50 ml again. The solution is cooled down in room temperature and thereafter the polymer is precipitated with 50 ml iso-propanol. A suitable amount of the solution is filtered and injected into HPLC equipment.

The HPLC measurement can e.g. be performed with a reversed phase C-18 column and methanol and water as mobile phase, for example in a ratio of 85 : 15. A UV detector can be used, wavelength 230 nm for Irganox 1010, Irgafos 168 and Vitamin E. The quantification is made using calibration curves in a conventional manner.

The following parameters further define the method used:

Instrument: Agilent 1200
Column: Zorbax C18-SB (150 x 4.6 mm)
Column temperature: 40 °C
Flow: 1 ml/min
Injection volume: 10 μl
Eluent: methanol/water
Gradient:0 min 85% methanol/15% water, 6 min 100% methanol, 23 min 100% methanol
Detection: UV wavelength 230 nm

Retention times:

| | |
|---|---|
| Vitamin E | 11.5 min |
| Irganox 1010 | 10.0 min |
| Irgafos 168 | 18.8 min |
| Phosphate | 12.6 min |

Phosphate is obtained by hydrolysis from Irgafos 168.

The results are given in Table 1.

#### d) Storage of plaques at 80°C in water

The storage test was done on compressed moulded sheets with 3mm thickness for the subsequent OIT test and the subsequent Delta E measurement and with 0.5 mm thickness for the subsequent oven ageing test at 120°C following water storage at 80 °C. The compressed sheets were prepared according to EN ISO 1872-2(February 2007). These samples were stored in distilled water at 80°C. The water was stirred continuously with a magnetic stirrer. The samples for the colour measurement and OIT were removed after specific times (days) as defined in Table 2 and 3 and thereafter subjected to the OIT test or the Delta E measurement. The 0.5 mm thick plaques were stored 3000 hours in distilled water at 80°C and after removal of the samples the ageing test at 120°C was started, where after specific times (days) the colour was measured and delta E was calculated, as explained below.

**e) Oxygen Induction Time, OIT**

The OIT test after the above water storage at 80 °C is performed according to ASTM D3895 using a Differential Scanning Calorimeter (DSC). A round sample with a diameter of 3 mm and a weight of 10 mg of the material to be tested is introduced into the DSC at room temperature, and the sample is heated to 200 °C under a nitrogen atmosphere with 20°C/min. As soon as 200 °C is reached the cell is maintained in an isothermal condition, and the gas is changed from nitrogen to oxygen. The flow rate of the oxygen is maintained at 50 $cm^3$/min. Under these conditions the stabilizer is consumed over time until it is totally depleted. At this point the polymer sample degrades or oxidizes liberating additional heat (exotherm reaction).

The time (in minutes) it takes for this exotherm reaction to appear from the time that the oxygen is introduced is reported as the OIT time, and is a measure of the oxidation stability of the material.

<u>Calculation:</u>

The data is plotted with the heat-flow signal (mW) on the y-axis, versus time on the x-axis. The x-axis should be expanded as much as possible to facilitate analysis.

The oxidation induction time, is the time calculated in minutes, from the introduction of oxygen to the intercept of the extended baseline and the extended tangent, drawn to the exothermic at the point of maximum slope.

The tangent method, described above, is the preferred means of determining the intercept point. If the oxidation reaction is slow, however, the exothermic peak becomes a leading edge, where it may be difficult to select an appropriate tangent.

If the selection of the appropriate baseline is not obvious using the tangent method, an offset method may be used. Accordingly, a second baseline is drawn parallel to the first baseline at a distance of 0.05 W/g above the first baseline. The intersection of this second line with the exothermal signal is defined as the onset of oxidation. The results are given in Table 2.

Double samples of each condition are measured, and the mean value is calculated.

**f) Delta E measurement (discoloration)**

The colour measurement after the above water storage at 80 °C was done with CIELAB Datacolor SF600X. A light source D65 10Deg. was used. Calculation was done according to the following formula according to the CIELAB standard.

$$\Delta L = L_P - L_B$$

$$\Delta a = a_P - a_B$$

$$\Delta b = b_P - b_B$$

$$\Delta E = \sqrt{\left(\Delta L^2 + \Delta a^2 + \Delta b^2\right)}$$

P.. Probe; B.. Bezug (Reference)

The results are given in Table 3

**g) Oven Ageing at 120°C**

The 0.5mm thick samples were subjected to a stability test in an oven at 120°C after the above 3000 h water storage at 80 °C. The stability test and the assessment of the degradation behaviour was done on the basis of ISO 4577: 1983 (determination of thermal oxidative stability in air - the oven method). The samples were taken out of the oven after specific periods of time (days) and color measurement was conducted as explained under f) above using the same measurement apparatus and the same calculation to obtain Delta E values. The results are given in Table 4. Additionally

the surface of the sample was visually examined for the determination of the time to embrittlement.

**2. Lifetime of pipes comprising different antioxidants**

The compositions for the examples were compounded/melt homogenized in a Buss-Co-Kneader 100 MDK/E-11 L/D. Polymer and additives were fed into the first mixer inlet of the Buss Co-Kneader which is a single screw extruder with a downstream discharge single extruder with pelletizing unit cutting pellets in molten stage and cooled via water. The mixer temperature profile was 91/164/193/189/196 °C from first inlet to outlet, and discharge extruder temperature 113 °C. The mixer screw rpm was 195 rpm and the throughput 175 kg/h.

Pipes 12 mm x 2 mm (outer diameter x wall thickness) were prepared by extrusion in a Battenfeld 45-25B extruder, which gave an output of 15 kg/h at a screw speed of 20 rpm. The melt temperature of the extruder was 218 °C.

Polyolefin (A) used as base resin in all examples is an unstabilised bimodal medium density polyethylene with a total 1-butene comonomer content of 3.2 wt% whereby the comonomer is present exclusively in the high molecular weight part of the polyethylene, an $MFR_5$ of 0.85 g/10 min, and a density of 940 $kg/m^3$.

The additives which were added to the base resins to yield the polyethylene compositions used for pipe production are given in Table 1. If not indicated otherwise, the values are given in wt%. Table 2 summarizes the results of oxidation resistance (after OIT test), Table 3 indicates resistance to discoloration (delta E measurement after water storage) and Table 4 expresses results of discoloration and thermal ageing resistance (delta E measurement after water storage and oven ageing).

In the example according to the invention (Example 2) a mixture of three antioxidants is used, namely 1,3,5-tris(3,5-di-tert-butyl-4-hydroxybenzyl)-2,4,6-trimethylbenzene (CAS No. 6683-19-8, Irganox 1330, from Ciba Speciality Chemicals), 2,5,7,8-Tetramethyl-2-(4',8',12'-trimethyl-tridecyl)chroman-6-ol (CAS No. 10191-41-0, Irganox E 201, Vitamin E from Ciba Speciality Chemicals) and Bis(2,6-di-*t*-butyl-4-methylphenyl)pentaerythrityl-di-phosphite (CAS No. 80693-00-1, ADK STAB PEP-36, from Adeka Corporation).

In Comparative Example 1 a typical conventional mixture of antioxidants is used, namely Tris(2,4-di-tert. butylphenyl)phosphite (CAS No. 31570-04-4, Irgafos 168 from Ciba Speciality Chemicals) and Pentaerythrityl-tetrakis(3-(3',5'-di-tert. butyl-4-hydroxyphenyl)propionate) (CAS No. 6683-19-8, Irganox 1010, from Ciba Speciality Chemicals).

Hence, in the inventive Example Irgafos 168 used in the Comparative Example is substituted by a mixture of Vitamin E and a specific diphosphite. It can be seen that the inventive combination of antioxidants achieves a highly improved oxidation resistance having a deterioration of only -9% after water storage of 125 days at 80 °C and OIT test, whereas the comparative combination shows a deterioration of -61 % after 125 days water storage and OIT test (Table 2 shown below). This effect is achieved with a reduced concentration of the antioxidants in comparison to the conventional composition. Furthermore, it has been found that the extraction of additives into the transporting medium and the discoloration (ΔE after water storage at 80 °C) was considerably reduced (Table 3 shown below). Also the thermal stability (after oven ageing at 120 °C following water storage at 80 °C) could be improved and the amount of the phosphorus-containing antioxidant could be reduced (Table 4 shown below). In contrast, the comparative composition suffered from considerable discoloration (Table 3) and was thermally degraded after 125 days oven ageing at 120 °C following water storage at 80 °C (Table 4).

**Table 1: Additive compositions**

| | Comparative Example 1 | Inventive Example 2 |
|---|---|---|
| IRGAFOS 168 (ppm) | 1100 | |
| IRGANOX 1010 (ppm) | 1100 | |
| IRGANOX 1330 (ppm) | | 1100 |
| IRGANOX E210 (VITAMINE E) (ppm) | | 100 |
| ADK STAB PEP-36 (ppm) | | 500 |
| **Total Dosing AO (ppm)** | **2200** | **1700** |

**Table 2: OIT after Water Storage at 80 °C.**

| | | Water Storage 80 °C (days) | | | | |
|---|---|---|---|---|---|---|
| **OIT 200 °C** | **Unit** | **0 d** | **21 d** | **42 d** | **84 d** | **125 d** |
| Comparative Example 1: | min | 49 | 47 | 48 | 46 | 19 |

(continued)

| | | Water Storage 80 °C (days) | | | | |
|---|---|---|---|---|---|---|
| OIT 200 °C | Unit | 0 d | 21 d | 42 d | 84 d | 125 d |
| Comparative Example 1: | % | 0 | -4 | -2 | -6 | -61 |
| Inventive Example 2: | min | 57 | 60 | 58 | 56 | 52 |
| Inventive Example 2: | % | 0 | 5 | 2 | -2 | -9 |

**Table 3: ∆E measurement after Water Storage at 80 °C**

| | | Water Storage at 80 °C (days) | | | | |
|---|---|---|---|---|---|---|
| Delta E | Unit | 0 d | 21 d | 42 d | 84 d | 125 d |
| Comparative Example 1: | - | 0 | 27,3 | 42,9 | 54,8 | 58,5 |
| Inventive Example 2 | - | 0 | 1.5 | 2.2 | 3.9 | 14.7 |

**Table 4: ∆E measurement on aged samples done at 120 °C after 3000 h water storage at 80 °C**

| | | Oven ageing 120 °C (days) | | | | | | |
|---|---|---|---|---|---|---|---|---|
| Delta E | Unit | 0 d | 21 d | 42 d | 84 d | 105 d | 125 d | 167 d |
| Comparative Example 1 | - | 0 | 26.4 | 38.6 | 42.2 | 44,2 | therm. degrad. | |
| Inventive Example 2 | - | 0 | 6.6 | 9.5 | 7.2 | 7.2 | 7.5 | 7.6 |

## Claims

**1.** A polyolefin composition comprising

a) a polyolefin base resin (A),
b) an antioxidant (B) according to formula (I):

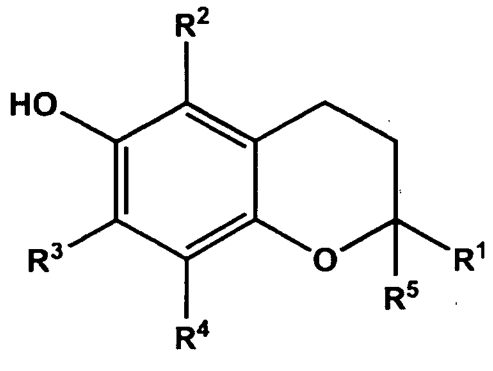

wherein $R^1$, $R^2$, $R^3$, $R^4$ and $R^5$ independently are H, or non-substituted or substituted aliphatic or aromatic hydrocarbyl radicals which may comprise heteroatoms,
c) an antioxidant (C) according to formula (II):

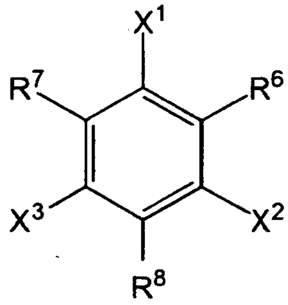

wherein

- $R^6$, $R^7$ and $R^8$ independently are non-substituted or substituted aliphatic or aromatic hydrocarbyl radicals which independently may comprise heteroatoms,
- $X^1$, $X^2$, and $X^3$ independently are H or OH, with the proviso that at least one of $X^1$, $X^2$ and $X^3$ is OH, and
- the entire molecule comprises no ester group; and

d) an antioxidant (D) according to formula (III):

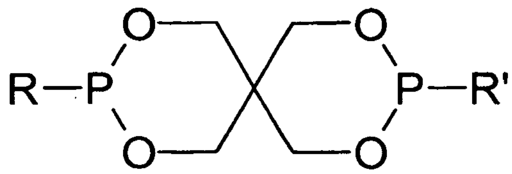

wherein R and R' are 2,6-di-*t*-butyl-4-methylphenyl.

**2.** The polyolefin composition according to claim 1, wherein antioxidant (B) comprises a compound according to formula (I) in which $R^1$ is a 4,8,12-trimethyl-tridecyl group.

**3.** The polyolefin composition according to claim 1 or 2, wherein the base resin (A) comprises an ethylene homo- or copolymer.

**4.** The polyolefin composition according to any one of claims 1 to 3, wherein the sum of concentration of antioxidants (B) and (C) is between 1000 and 4800 ppm.

**5.** The polyolefin composition according to any one of claims 1 to 4, wherein the sum of concentration of antioxidants (B), (C) and (D) is between 500 and 2500 ppm.

**6.** An article comprising a polyolefin composition according to any one of claims 1 to 5.

**7.** The article according to claim 6 which is a pipe or a fitting.

**8.** Use of a polyolefin composition according to any one of claims 1 to 5 for the production of a pipe or a fitting.

**9.** Use of an article according to claim 6 or 7 for the transport of chlorine dioxide-containing water.

**10.** Use of a combination of three antioxidants (B), (C) and (D) in a polyolefin composition for increasing the lifetime of a pipe or a fitting made of said polyolefin composition which pipe is in permanent contact with chlorine dioxide-containing water, wherein said antioxidants have the following formulae:

- antioxidant (B) according to formula (I):

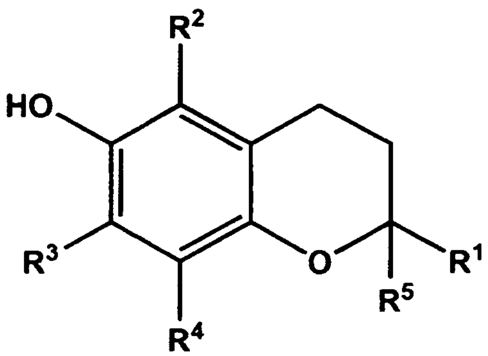

wherein $R^1$, $R^2$, $R^3$, $R^4$ and $R^5$ independently are H, or non-substituted or substituted aliphatic or aromatic hydrocarbyl radicals which may comprise heteroatoms,
- antioxidant (C) according to formula (II):

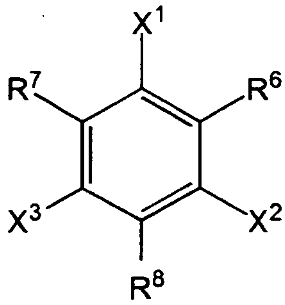

wherein
- $R^6$, $R^7$ and $R^8$ independently are non-substituted or substituted aliphatic or aromatic hydrocarbyl radicals which independently may comprise heteroatoms,
- $X^1$, $X^2$, and $X^3$ independently are H or OH, with the proviso that at least one of $X^1$, $X^2$ and $X^3$ is OH, and
- the entire molecule comprises no ester group; and
- an antioxidant (D) according to formula (III):

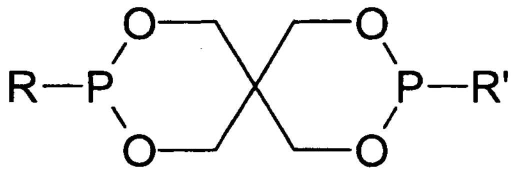

wherein R and R' are 2,6-di-*t*-butyl-4-methylphenyl.

**Patentansprüche**

1. Polyolefinzusammensetzung, umfassend

a) ein Polyolefinbasisharz (A),
b) ein Antioxidationsmittel (B) gemäß Formel (I):

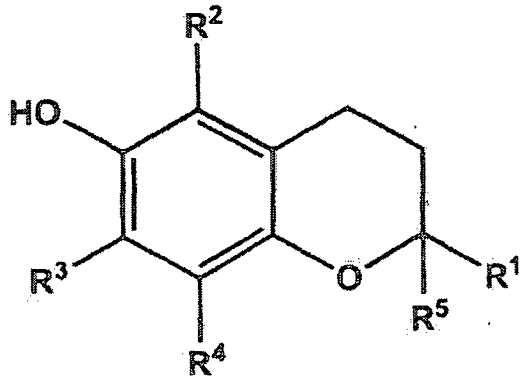

worin $R^1$, $R^2$, $R^3$, $R^4$ und $R^5$ unabhängig voneinander H, unsubstituierte oder substituierte aliphatische oder aromatische Kohlenwasserstoffradikale sind, die Heteroatome umfassen können,

c) ein Antioxidationsmittel (C) gemäß der Formel (II):

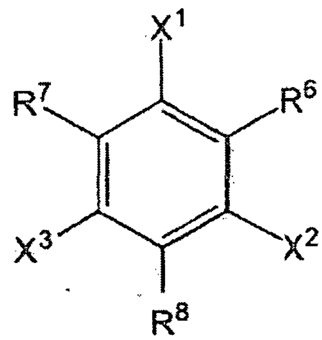

worin

- $R^6$, $R^7$ und $R^8$ unabhängig voneinander unsubstituierte oder substituierte aliphatische oder aromatische Kohlenwasserstoffradikale sind, die unabhängig voneinander Heteroatome umfassen können,
- $X^1$, $X^2$ und $X^3$ unabhängig voneinander H oder OH sind, mit der Maßgabe, dass mindestens einer der Reste $X^1$, $X^2$ und $X^3$ OH ist, und
- das gesamte Molekül keine Estergruppe enthält; und

d) ein Antioxidationsmittel (D) nach der Formel (III):

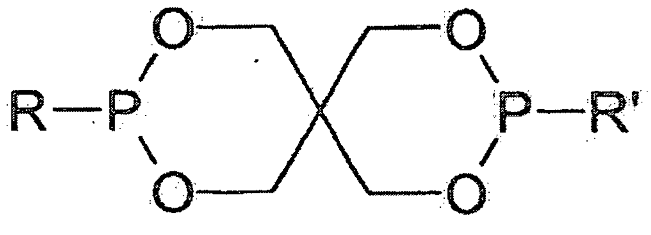

wobei R und R' 2,6-di-t-butyl-4-methylphenyl ist.

**2.** Polyolefinzusammensetzung nach Anspruch 1, worin das Antioxidationsmittel (B) gemäß Formel (I) eine Verbindung umfasst, in der $R^1$ eine 4,8,12-trimethyl-tridecyl-Gruppe ist.

**3.** Polyolefinzusammensetzung nach Anspruch 1 oder 2, wobei das Basisharz (A) ein Ethylenhomo- oder -kopolymer umfasst.

**4.** Polyolefinzusammensetzung nach einem der Ansprüche 1 bis 3, wobei die Summe der Konzentration von Antioxidationsmitteln (B) und (C) zwischen 1000 und 4800 ppm liegt.

**5.** Polyolefinzusammensetzung nach einem der Ansprüche 1 bis 4, wobei die Summe der Konzentration von Antioxidationsmitteln (B), (C) und (D) zwischen 500 und 2500 ppm liegt .

**6.** Gegenstand, umfassend eine Polyolefinzusammensetzung nach einem der Ansprüche 1 bis 5.

**7.** Der Gegenstand nach Anspruch 6, der ein Rohr oder ein Formstück ist.

**8.** Verwendung einer Polyolefinzusammensetzung nach einem der Ansprüche 1 bis 5 zur Herstellung eines Rohrs oder eines Formstücks.

**9.** Verwendung eines Gegenstands nach Anspruch 6 oder 7 für den Transport von Chlordioxid enthaltenden Wassers.

**10.** Verwendung einer Kombination von drei Antioxidationsmitteln (B), (C) und (D) in einer Polyolefinzusammensetzung zur Erhöhung der Lebensdauer eines Rohres oder eines Formstücks aus der Polyolefinzusammensetzung, wobei die Rohrleitung in ständigem Kontakt mit Chlordioxid enthaltenden Wasser ist und wobei die Antioxidationsmittel die folgenden Formeln haben:

- Antioxidationsmittel (B) gemäß Formel (I):

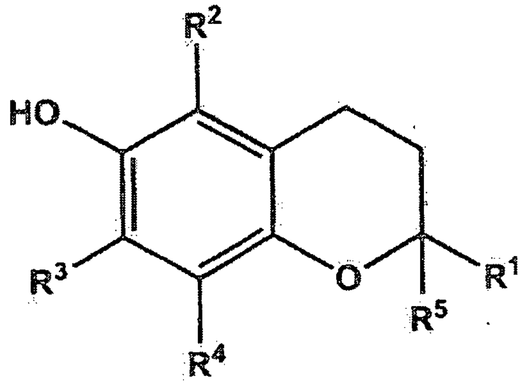

worin $R^1$, $R^2$, $R^3$, $R^4$ und $R^5$ unabhängig voneinander H oder unsubstituierte oder substituierte aliphatische oder aromatische Kohlenwasserstoffradikale sind, die Heteroatome umfassen können,
- Antioxidationsmittel (C) gemäß der Formel (II):

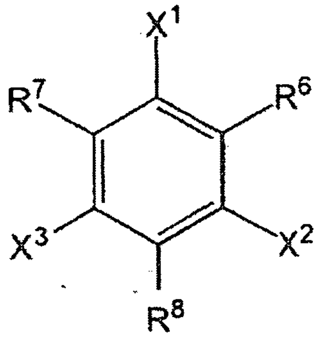

worin
- $R^6$, $R^7$ und $R^8$ unabhängig voneinander unsubstituierte oder substituierte aliphatische oder aromatische Kohlenwasserstoffradikale sind, die unabhängig voneinander Heteroatome umfassen können,
- $X^1$, $X^2$ und $X^3$ unabhängig voneinander H oder OH sind, mit der Maßgabe, dass mindestens einer der Reste $X^1$, $X^2$ und $X^3$ OH ist, und

- das gesamte Molekül keine Estergruppe enthält; und
- Antioxidationsmittel (D) nach der Formel (III):

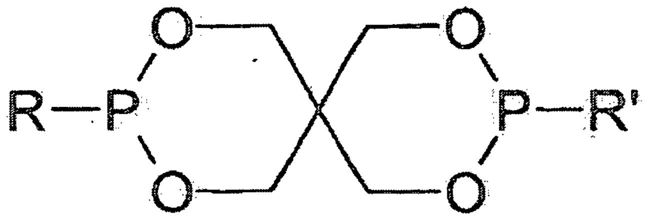

wobei R und R' 2,6-Di-t-butyl-4-methylphenyl ist.

## Revendications

**1.** Composition polyoléfinique comprenant

a) une résine de base polyoléfinique (A),
b) un antioxydant (B) de formule (I) :

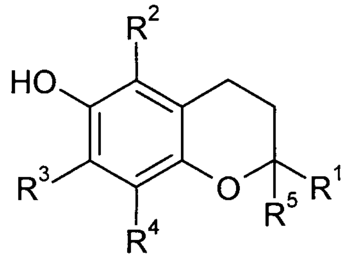

dans laquelle $R^1$, $R^2$, $R^3$, $R^4$ et $R^5$ sont indépendamment H ou des radicaux hydrocarbyles aromatiques ou aliphatiques substitués ou non substitués qui peuvent comprendre des hétéroatomes,
c) un antioxydant (C) de formule (II) :

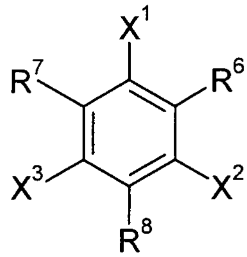

dans laquelle
$R^6$, $R^7$ et $R^8$ sont indépendamment des radicaux hydrocarbyles aromatiques ou aliphatiques substitués ou non substitués qui peuvent indépendamment comprendre des hétéroatomes,
$X^1$, $X^2$ et $X^3$ sont indépendamment H ou OH, sous réserve qu'au moins l'un parmi $X^1$, $X^2$ et $X^3$ soit OH, et la molécule dans son entier ne comprend pas de groupement ester ; et
d) un antioxydant (D) de formule (III) :

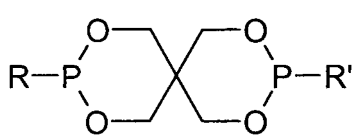

dans laquelle R et R' sont 2,6-di-t-butyl-4-méthylphényle.

2. Composition polyoléfinique selon la revendication 1, dans laquelle l'antioxydant (B) comprend un composé de formule (I) dans lequel $R^1$ est un groupe 4, 8,12-triméthyl-tridécyle.

3. Composition polyoléfinique selon la revendication 1 ou 2, dans laquelle la résine de base (A) comprend un homo- ou copolymère d'éthylène.

4. Composition polyoléfinique selon l'une quelconque des revendications 1 à 3, dans laquelle la somme des concentrations des antioxydants (B) et (C) est comprise entre 1000 et 4800 ppm.

5. Composition polyoléfinique selon l'une quelconque des revendications 1 à 4, dans laquelle la somme des concentrations des antioxydants (B), (C) et (D) est comprise entre 500 et 2500 ppm.

6. Article comprenant une composition polyoléfinique selon l'une quelconque des revendications 1 à 5.

7. Article selon la revendication 6 qui est un tuyau ou un raccord.

8. Utilisation d'une composition polyoléfinique selon l'une quelconque des revendications 1 à 5 pour la production d'un tuyau ou d'un raccord.

9. Utilisation d'un article selon la revendication 6 ou 7 pour le transport d'eau contenant du dioxyde de chlore.

10. Utilisation d'une combinaison de trois antioxydants (B), (C) et (D) dans une composition polyoléfinique pour l'augmentation de la durée de vie d'un tuyau ou d'un raccord fait en ladite Composition polyoléfinique, lequel tuyau est en contact permanent avec de l'eau contenant du dioxyde de chlore, dans laquelle lesdits antioxydants ont les formules suivantes :

antioxydant (B) de formule (I) :

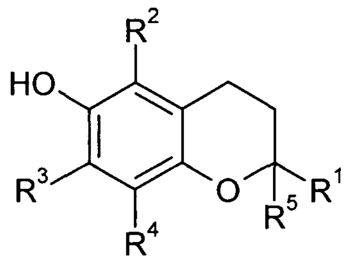

dans laquelle $R^1$, $R^2$, $R^3$, $R^4$ et $R^5$ sont indépendamment H ou des radicaux hydrocarbyles aromatiques ou aliphatiques substitués ou non substitués qui peuvent comprendre des hétéroatomes,
antioxydant (C) de formule (II) :

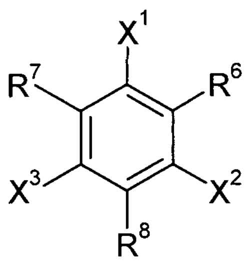

dans laquelle
$R^6$, $R^7$ et $R^8$ sont indépendamment des radicaux hydrocarbyles aromatiques ou aliphatiques substitués ou non substitués qui peuvent indépendamment comprendre des hétéroatomes,
$X^1$, $X^2$ et $X^3$ sont indépendamment H ou OH, sous réserve qu'au moins l'un parmi $X^1$, $X^2$ et $X^3$ soit OH, et

la molécule dans son entier ne comprend pas de groupement ester ; et un antioxydant (D) de formule (III) :

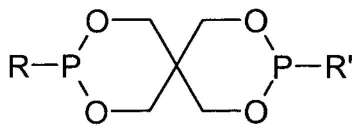

dans laquelle R et R' sont 2,6-di-t-butyl-4-méthylphényle.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1911798 A1
- EP 2199330 A1
- WO 9749758 A
- EP 0739937 A
- WO 02102891 A
- WO 2004055068 A
- WO 2004055069 A, Borealis
- EP 0810235 A